# EUROPEAN PATENT APPLICATION

(11) **EP 3 376 487 A1**
(43) Date of publication of application: **19.09.2018**
(21) Application number: 17161097.5
(22) Date of filing: 15.03.2017
(51) Int. Cl.: G08G 1/16, G01S 13/93

(54) **METHOD AND SYSTEM FOR PROVIDING REPRESENTATIVE WARNING SOUNDS WITHIN A VEHICLE**

(71) Applicant: Volvo Car Corporation, 40 531 Göteborg (SE)
(72) Inventor: Nolhage, Mr. Jesper, 1753 Köpenhamn V (DK); Lohse, Mr. Henrik, 3060 Espergærde (DK); Christensen, Mr. Claus Allan, 2300 København (DK)
(74) Representative: Valea AB

(57) **Abstract**

The present disclosure relates to a method performed by a warning sound differentiating system (1) for providing within a vehicle (2) warning sounds representative of objects with which there is an impending risk of collision. The warning sound differentiating system determines (100) - with support from one or more sensors (21) - that there is an object (4) in a vicinity of the vehicle, with which there is an impending risk of collision. The warning sound differentiating system moreover determines (1002) object characteristics of the object based on detection data (210) of the object captured by the one or more sensors. Furthermore, the warning sound differentiating system classifies (1003) - based on the object characteristics - the object into a matching object type category (60) selected from a set of object type categories (6). The warning sound differentiating system further derives (1004) - from a set of differentiated warning sound candidates (7) - a matching warning sound candidate (70) associated with the matching object type category. Moreover, with support from one or more loudspeakers (22), the warning sound differentiating system enables playing back (1005) the matching warning sound candidate within the vehicle.

The disclosure also relates to such a warning sound differentiating system and a vehicle comprising the same.

## Description

### TECHNICAL FIELD

The present disclosure relates to a warning sound differentiating system and a method performed therein for providing within a vehicle warning sounds representative of objects with which there is an impending risk of collision.

### BACKGROUND

Commonly, vehicles today are provided with systems warning a driver of objects with which there is an impending risk of collision. Although such known systems are helpful in many ways and in many situations, they are limited in their ability to give the vehicle occupant e.g. driver an accurate understanding of the immediate surroundings, which can be critical in order to avoid accidents.

US 2014/0218528 A1, for instance, discloses an audio warning system that emits audio content, e.g. beeps, tones or phrases, to warn a driver of an impending danger. However, although US 2014/0218528 A1 can output the audio content so that the driver hears the warning sound coming from the relative location at the appropriate volume, there is still room for improvement when it comes to warning a driver of objects with which there is an impending risk of collision.

### SUMMARY OF THE INVENTION

It is therefore an object of embodiments herein to provide an approach for in an improved and/or alternative manner enable warning sounds within a vehicle, which warning sounds are representative of objects with which there is an impending risk of collision.

According to a first aspect of embodiments herein, the object is achieved by a method performed by a warning sound differentiating system for providing within a vehicle warning sounds representative of objects with which there is an impending risk of collision. The warning sound differentiating system determines - with support from one or more sensors - that there is an object in a vicinity of the vehicle, with which there is an impending risk of collision. The warning sound differentiating system moreover determines object characteristics of the object based on detection data of the object captured by the one or more sensors. Furthermore, the warning sound differentiating system classifies - based on the object characteristics - the object into a matching object type category selected from a set of object type categories. The warning sound differentiating system further derives - from a set of differentiated warning sound candidates - a matching warning sound candidate associated with the matching object type category. Moreover, with support from one or more loudspeakers, the warning sound differentiating system play enables playing back the matching warning sound candidate within the vehicle.

Thereby, by introducing a method performed by a warning sound differentiating system for providing within a vehicle warning sounds representative of objects with which there is an impending risk of collision, an approach is provided which enables emitting in-vehicle audible warnings relevant for said objects. That is, since it is determined - with support from one or more sensors - that there is an object in a vicinity of the vehicle, with which there is an impending risk of collision, there is established that an object has been sensed relatively near the vehicle and that the vehicle is - or may be - in risk of colliding with and/or bumping into said object. Moreover, that is, since object characteristics of the detected object are determined based on detection data of the object captured by the one or more sensors, characterizing features of the detected object are established derived from input provided by the sensor(s). Furthermore, that is, since the object is classified - based on the object characteristics -into a matching object type category selected from a set of object type categories, the object is categorized into an object type category - out of a plurality of different object type categories - that is considered to correspond to the type of the detected object. Moreover, that is, since there is derived - from a set of differentiated warning sound candidates - a matching warning sound candidate associated with said matching object type category, there is selected - out of a plurality of different warning sounds - a warning sound related to the object type category considered to match the type of the detected object. Accordingly, depending on what type the detected object is considered to be, such as e.g. a human being and/or another vehicle, there is selected a warning sound representing that specific type. That is, a type of sound of a first warning sound candidate associated with a first object category, such as e.g. a human being, may differ from a type of sound of a second warning sound candidate associated with a second object category, such as e.g. another vehicle. Furthermore, that is, since there is enabled - with support from one or more loudspeakers - playing back the matching warning sound candidate within the vehicle, a warning sound representative for the type of object the detected object is considered to be, is enabled to be emitted in the vehicle. Accordingly, the warning sound differentiating system specifies to occupants of the vehicle - such as the driver thereof - the nature of the detected object, i.e. of what type the detected object is determined to be. Accordingly, rather than providing the same type of warning sound - such as a traditional beep - regardless of the type of the detected object, the inventive concept enables for different warning sounds to be emitted for different types of objects, thus allowing the vehicle occupants e.g. the driver to differentiate between different types of detected objects. Consequently, said driver is enabled to more accurately understand the immediate vehicle surroundings, which can be critical in order to avoid accidents.

For that reason, an approach is provided for in an improved and/or alternative manner enable warning sounds within a vehicle, which warning sounds are representative of objects with which there is an impending risk of collision.

The technical features and corresponding advantages of the above mentioned method will be discussed in further detail in the following.

By introducing a method performed by a warning sound differentiating system for providing within a vehicle warning sounds representative of objects with which there is an impending risk of collision, an approach is provided which enables emitting in-vehicle audible warnings relevant for said objects. "Providing" may throughout this disclosure refer to "emitting" and/or "playing back". Moreover, "vehicle" may refer to any arbitrary vehicle, for instance an engine-propelled vehicle, such as a car, truck, lorry, van, bus, motor cycle, scooter, tractor, military vehicle, etc, and may further optionally comprise a commonly known parking assistance system. "Warning sounds" may throughout refer to "audible warnings" and/or "a warning sound", whereas "sounds" throughout may refer to "sound signals" and/or "audible signals". The expression "representative of" objects may refer to "relevant for", "sufficient for" and/or associated with" objects. Furthermore, "objects" may throughout refer to "obstacles" and/or "an object", whereas "impending" risk throughout may refer to "potential" and/or "probable" risk. "Collision" may throughout the disclosure refer to "impact" and/or "vehicle collision", whereas the expression "with which there is an impending risk of collision" throughout may refer to "with which said vehicle is considered to risk colliding" and/or "which said vehicle is in risk of bumping into". According to an example, the expression "for providing within a vehicle warning sounds" may refer to "for providing within a vehicle warnings". "Warning sound differentiating system" may then refer to a "warning differentiating system". The "warning sound differentiating system" may fully or at least partly be comprised in, be integrated with and/or be connected to the vehicle, for instance be distributed between one or more vehicle nodes, such as ECUs ("Electronic Control Units"). Additionally or alternatively, the warning sound differentiating system may at least partly be comprised in a mobile device integrated with, connected to and/or carried on-board the vehicle, which mobile device for instance may refer to a multi-functional smart phone, mobile phone, mobile terminal or wireless terminal, portable computer such as a laptop, PDA or tablet computer, tablet such as an iPad, Pocket PC, and/or mobile navigation device.

Since the warning sound differentiating system determines - with support from one or more sensors - that there is an object in a vicinity of the vehicle, with which there is an impending risk of collision, there is established that an object has been sensed relatively near the vehicle and that the vehicle is - or may be - in risk of colliding with and/or bumping into said object. Determining whether there is an impending risk of collision may be accomplished as commonly known in the art. For instance, the determination that there is an impending risk of collision may - as commonly known - be based on a relative distance between the vehicle and the object, a travelling and/or movement speed of the vehicle and/or object, the size and/or characteristics of the object, etc. The expression "determining that there is" may throughout refer to "detecting", whereas "sensors" may refer to "sensors on-board said vehicle". Moreover, "sensors" may refer to "environment detecting sensors" and/or "visually detecting sensors", and "sensors" may further refer to "sensor devices".

Since the warning sound differentiating system determines object characteristics of the object based on detection data of the object captured by the one or more sensors, characterizing features of the detected object are established derived from input provided by the sensor(s). Determining the object characteristics may be accomplished as commonly known in the art, for instance by analysing captured data - such as at least e.g. image data - of the object. The expression "determining" object characteristics may throughout the disclosure refer to "deriving", "recognizing" and/or "receiving" object characteristics, whereas "object characteristics" of the object throughout may refer to "characterizing object features", "an object type" and/or "a nature" of the object. Moreover, "based on" detection data may throughout the disclosure refer to "derived from" detection data, whereas "captured" throughout may refer to "sensed" and/or "visually sensed". Detection "data" may throughout the disclosure refer to detection "input", whereas "detection" data throughout may refer to "sensed" and/or "derived" data.

Since the warning sound differentiating system classifies - based on the object characteristics - the object into a matching object type category selected from a set of object type categories, the object is categorized into an object type category - out of a plurality of different object type categories - that is considered to correspond to the type of the detected object. That is, the detected objected is classified into the object type category that - from analysing the object characteristics of the detected object - is considered to represent the type of the detected object. Classifying the object into a matching object type category may be accomplished as commonly known in the art, for instance by comparing the object characteristics to parameters of the different object type categories of said set, which parameters define respective object type category. The object may for instance be classified into the object type category considered to represent the best match, and/or be classified into said object type category provided that a confidence level of the match is above a minimum confidence threshold level. "Classifying" may throughout the disclosure refer to "categorizing", and moreover, "classifying [...] the object into" a matching type category may throughout refer to "associating [...] the object with" a matching type category. Moreover, "matching" object type category may throughout the disclosure refer to "representative", "corresponding" and/or "selected" object type category, whereas "object type category" throughout may refer to "object type". "Based on" the object characteristics may throughout refer to "by analysing" the object characteristics. Moreover, according to an example, "classifying, based on said object characteristics, said object into a matching object type category selected from a set of object type categories" may refer to "classifying, based on said object characteristics, said object into a matching object type category selected from a set of object type categories, by comparing said object characteristics to parameters of respective object type category of said set, which parameters indicate and/or define characterizing object features of respective object type category". The expression "selected from" a set of object type categories may throughout the disclosure refer to "out of" a set of object type categories, whereas "a set of object type categories" may refer to "a predetermined and/or pre-stored set of object type categories" and/or "a set of predetermined and/or pre-stored object type categories". Moreover, "a set of" object type categories may refer to "two or more" object type categories.

Since the warning sound differentiating system derives - from a set of differentiated warning sound candidates - a matching warning sound candidate associated with said matching object type category, there is selected - out of a plurality of different warning sounds - a warning sound related to the object type category considered to match the type of the detected object. Accordingly, depending on what type the detected object is considered to be, such as e.g. a human being and/or another vehicle, there is selected a warning sound representing that specific type. That is, a type of sound of a first warning sound candidate associated with a first object category, such as e.g. a human being, may differ from a type of sound of a second warning sound candidate associated with a second object category, such as e.g. another vehicle. "Deriving [...]" a matching warning sound candidate may throughout the disclosure refer to "selecting [...]" a matching warning sound candidate. Moreover, "a set of differentiated warning sound candidates" may refer to "a predetermined and/or pre-stored set of differentiated warning sound candidates" and/or "a set of predetermined and/or pre-stored set of differentiated warning sound candidates". "A set" of differentiated warning sound candidates may refer to "two or more" differentiated warning sound candidates. The expression "differentiated" warning sound candidates may refer to "different" and/or "differing" warning sound candidates, whereas "warning sound candidates" may refer to "warning sounds". Moreover, "matching" warning sound candidate may throughout the disclosure refer to "representative", "corresponding" and/or "selected" warning sound candidate, whereas "associated with" the matching object type category throughout may refer to "related to", "matching", "representative of", "mapped to", "mapped with" and/or "digitally stored to be associated with" the matching object type category.

Since the warning sound differentiating system enables - with support from one or more loudspeakers - playing back the matching warning sound candidate within the vehicle, a warning sound representative for the type of object the detected object is considered to be, is enabled to be emitted in the vehicle. Accordingly, the warning sound differentiating system specifies to occupants of the vehicle - such as the driver thereof -the nature of the detected object, i.e. of what type the detected object is determined to be. That is, rather than providing the same type of warning sound - such as a traditional beep - regardless of the type of the detected object, the inventive concept enables for different warning sounds to be emitted for different types of objects. Thus, should the detected object be considered to be e.g. a human being, then the warning sound emitted in the vehicle would be represented by a sound representative for a human being. On the other hand, should the detected object be considered to be e.g. another vehicle, then the warning sound emitted in the vehicle would be represented by a sound representative for a vehicle. Accordingly, different warning sounds are provided for different types of detected objects, which enables the vehicle occupants e.g. the driver to differentiate between different types of detected objects. Consequently, said driver is enabled to more accurately understand the immediate vehicle surroundings, which can be critical in order to avoid accidents. Subsequently, the vehicle driver may potentially, upon comprehending the warning sound pertinent the object with which there is an impending risk of collision, choose to act differently depending on the type of the object, for instance be even more careful should the warning sound insinuate that the object is e.g. a child rather than e.g. a bush. "Enabling playing back" may refer to "initiating playing back", "allowing playing back", "providing playing back" and/or "playing back". Moreover, "playing back" may refer to "emitting", "providing" and/or "playing". "Within" the vehicle may throughout the disclosure refer to "in" and/or "on-board" the vehicle, while "loudspeakers" may refer to "loudspeakers distributed within the vehicle". According to an example, "enabling playing back said matching warning sound candidate within said vehicle with support from one or more loudspeakers" may refer to "enabling playing back said matching warning sound candidate within said vehicle with support from one or more loudspeakers when there is said impending risk of collision with said object ".

Optionally, the one or more sensors discussed above may comprise at least two different types of sensors selected from a group of cameras, ultrasonic sensors and radars. The determining of object characteristics discussed above then comprises determining the object characteristics based on fusing respective detection data captured by the at least two different types of sensors. Thereby, since the one or more sensors discussed above comprise at least two different types of sensors selected from the group of cameras, ultrasonic sensors and radars, sensors of at least two different types - respectively capable of in their own manner detecting objects in vicinity of the vehicle - are utilized for detecting - and subsequently determining - that there is an object in a vicinity of the vehicle with which there is an impending risk of collision. Moreover, thereby, since determining of object characteristics then comprises determining the object characteristics based on fusing respective detection data captured by the at least two different types of sensors, characterizing features of the detected object are established derived from input provided by a first type of sensor combined with input provided by a second type of sensor. Accordingly, "sensor fusion" - as commonly known in the art - is utilized for in an improved manner determining characteristics of the detected object. The cameras, ultrasonic sensors and/or radars and the uses thereof may refer to commonly known cameras, ultrasonic sensors and/or radars and commonly known manners in which said sensors are used for detecting objects in vicinity of the vehicle and/or for determining characteristics thereof.

Optionally, the set of object type categories discussed above may comprise a category representing one or more types of vehicles, such as e.g. a passenger car, a truck, and/or a bus, etc, for instance being motor-driven vehicles and further for instance having three or more wheels.

Additionally or alternatively, the set of object type categories discussed above may optionally comprise a category representing one or more types of human beings, such as a child and/or an adult, e.g. a vulnerable road user ("VRU"), a pedestrian, a jogger, and/or a roller skater, etc.

Additionally or alternatively, the set of object type categories discussed above may optionally comprise a category representing one or more types of two-wheeled vehicles, such as a bicycle, a scooter and/or a motorcycle, etc.

Additionally or alternatively, the set of object type categories discussed above may optionally comprise a category representing one or more types of strollers, such as a baby carriage and/or a sulky, etc.

Additionally or alternatively, the set of object type categories discussed above may optionally comprise a category representing one or more types of animals, such as a dog, a cat, a horse, and/or a wild animal, etc.

Additionally or alternatively, the set of object type categories discussed above may optionally comprise a category representing one or more types of stationary objects, for instance a hard stationary object such as a wall, a curb and/or a pillar, etc., and/or for instance soft stationary objects such as hedges, grass and/or leaves, etc.

Additionally or alternatively, the set of object type categories discussed above may optionally comprise a category representing one or more types of other and/or unidentifiable objects.

Moreover, additionally or alternatively, the set of differentiated warning sound candidates discussed above may optionally comprise a candidate resembling a sound mimicking a vehicle and/or a vehicle in motion, such as honking, engine humming or running, and/or rolling tyres on asphalt, etc.

Additionally or alternatively, the set of differentiated warning sound candidates may optionally comprise a candidate resembling a sound mimicking a human being and/or a human being in motion, such as whistling, humming or hollering, walking steps, and/or running steps, etc.

Additionally or alternatively, the set of differentiated warning sound candidates may optionally comprise a candidate resembling a sound mimicking a two-wheeled vehicle and/or a two-wheeled vehicle in motion, such as ringing of a bicycle bell, honking of a scooter and/or motorcycle, bicycle pedalling and/or scooter or motorcycle engine humming or running, etc.

Additionally or alternatively, the set of differentiated warning sound candidates may optionally comprise a candidate resembling a sound mimicking a baby and/or a young child e.g. under the age of five, such as baby crying, baby babbling and/or baby giggling, etc.

Additionally or alternatively, the set of differentiated warning sound candidates may optionally comprise a candidate resembling a sound mimicking an animal, such as barking, meowing, whinnying and/or roaring, etc.

Additionally or alternatively, the set of differentiated warning sound candidates may optionally comprise a candidate indicating a stationary object, such as a beep and/or tone, etc.

Additionally or alternatively, the set of differentiated warning sound candidates may optionally comprise a candidate indicating other and/or unidentifiable objects, such as an alternative beep and/or an alternative tone, etc.

According to an example, optionally,
said candidate resembling a sound mimicking a vehicle and/or a vehicle in motion is associated with said category representing one or more types of vehicles;
said candidate resembling a sound mimicking a human being and/or a human being in motion is associated with said category representing one or more types of human beings;
said candidate resembling a sound mimicking a two-wheeled vehicle and/or a two-wheeled vehicle in motion is associated with said category representing one or more types of two-wheeled vehicles;
said candidate resembling a sound mimicking a baby is associated with said category representing one or more types of strollers;
said candidate resembling a sound mimicking an animal is associated with said category representing one or more types of animals;.
said candidate indicating a stationary object is associated with said category representing one or more types of stationary objects; and/or
said candidate indicating other and/or unidentifiable objects is associated with said category representing one or more types of other and/or unidentifiable objects.

According to an example, optionally, the warning sound differentiating system performs the steps and/or actions discussed above,
wherein said one or more loudspeakers are distributed within said vehicle such that 3D spatial sound is supported, and
wherein said ***determining*** that there is an object in a vicinity of said vehicle, further comprises determining a relative position and/or a relative distance of said object relative said vehicle, and
wherein said ***enabling*** playing back then further comprises enabling playing back the matching warning sound candidate such that it reflects - in 3D spatial sound distribution and in volume - said relative position and/or said relative distance of said object relative said vehicle.

Thereby, the warning sound is distributed and subsequently provided within the vehicle in a manner reflecting how the detected object is positioned in relation to the vehicle.

Optionally, the determining by the warning sound differentiating system that there is an object in a vicinity of the vehicle with which there is an impending risk of collision, may further comprise determining that the object is moving and further determines a movement direction of the object in view of the vehicle. The deriving by the warning sound differentiating system may then comprise deriving a matching warning sound candidate which is additionally associated with the movement direction of the object. The matching warning sound candidate audibly reflects the movement direction. Thereby, since the warning sound differentiating system determines that the object is moving and further determines a movement direction of the object in view of the vehicle, there is established whether the detected object is moving in a direction at least partly toward or in a direction at least partly away from the vehicle. Moreover, thereby, since the warning sound differentiating system then derives a matching warning sound candidate which is additionally associated with the movement direction of the object, there is selected - out of the set of differentiated warning sound candidates - a warning sound not only related to the object type category considered to match the type of the detected object, but additionally related to the movement direction of the detected object. That is, a type of sound of a first warning sound candidate associated with a first movement direction may differ from a type of sound of a second warning sound candidate associated with a second movement direction. Accordingly, depending on the movement direction of the detected object, there is selected a warning sound representing that specific movement direction. Furthermore, thereby, since the matching warning sound candidate audibly reflects the movement direction, the warning sound reveals and/or indicates whether the detected object is moving in a direction at least partly toward or in a direction at least partly away from the vehicle. For instance, a warning sound candidate being a result of a detected e.g. human being moving at least partly away from the vehicle may be represented by a sound of human steps that appear to be moving away, whereas a warning sound candidate being a result of a detected e.g. vehicle moving at least partly toward the vehicle may be represented by a sound of a humming engine that appear to be approaching. Accordingly, the warning sound subsequently played back in the vehicle thus reveals not only the type of the detected object, but additionally whether said object is moving toward or away from the vehicle. Determining that the object is moving and the movement direction of the object in view of the vehicle may be determined as commonly known in the art, with support from the one or more sensors. Audibly "reflecting" may refer to audibly "indicating" and/or "insinuating", whereas "audibly reflecting" may refer to "reflecting".

Optionally, the warning sound differentiating system may further enable displaying within the vehicle - with support from one or more displays - a matching visual icon associated with the matching warning sound candidate. Thereby, in addition to the audible warning sound, there is enabled provision of a corresponding visual warning. Accordingly, a visual icon resembling and/or being representative for the detected object is displayed within the vehicle, which may support the e.g. vehicle driver in comprehending the type of the detected object. "Enabling displaying" may refer to "initiating displaying", "allowing displaying", "providing displaying" and/or "displaying". Moreover, "displaying" may refer to "visualizing and/or "providing". "Displays" may refer to "digital displays", whereas "matching" visual icon may refer to "representative", "corresponding" and/or "selected" visual icon. Moreover, "icon" may refer to "representation", whereas "visual icon" may refer to "icon". "Associated with" the matching warning sound candidate may refer to "related to", "matching", "representative of", "mapped to", "mapped with" and/or "digitally stored to be associated with" the matching warning sound candidate.

The determining discussed above that there is an object in a vicinity of the vehicle with which there is an impending risk of collision, the determining of object characteristics discussed above, the classifying discussed above, the deriving discussed above and/or the enabling discussed above, may optionally be performed during parking manoeuvring of the vehicle. Thereby, the introduced concept is provided to when the vehicle is engaged in parking activities, such as manoeuvring into or out of a parking spot, and/or while in reverse. The expression "providing within a vehicle" warning sounds may in this case then refer to "providing within a vehicle during parking manoeuvring" warning sounds. Establishing whether the vehicle is in a situation of parking manoeuvring may be accomplished as commonly known in the art, e.g. by determining if the vehicle is travelling at a speed lower than a speed threshold and/or of if reverse is activated. "Parking manoeuvring of said vehicle" may refer to "parking activities and/or a parking activity of said vehicle" and/or "said vehicle being in reverse". According to an example, "parking manoeuvring of said vehicle" may refer to "a vehicle speed of said vehicle being lower than a speed threshold". Such a speed threshold may be set to any arbitrary value considered appropriate, and may range from e.g. 5 km/h - 30 km/h.

Optionally, the determining discussed above of that there is an object in a vicinity of the vehicle with which there is an impending risk of collision, may further comprise that the warning sound differentiating system further determines that there is a second object in the vicinity of the vehicle with which there is an impending risk of collision, and associates both the objects with a respective threat level. The determining of object characteristics discussed above then further comprises that the warning sound differentiating system further determines object characteristics of the second object. The classifying discussed above then further comprises that the warning sound differentiating system further classifies the second object into a second matching object type category, wherein both matching object type categories are associated with a respective priority level. The deriving discussed above then further comprises that the warning sound differentiating system further derives a second matching warning sound candidate associated with the second matching object type category. The enabling discussed above then further comprises that the warning sound differentiating system further - when the threat level associated with the second object is lower than the threat level of the object and/or when the second matching object type category has a lower priority level than the matching object type category - refrains from enabling playing back the second matching warning sound candidate and/or enables playing back the second matching warning sound candidate at a lowered volume level and/or with a delay. Thereby, since it is determined that there is a second object in the vicinity of the vehicle with which there is an impending risk of collision, there is established that there is not only a first but a second object with which the vehicle is at risk of colliding. Moreover, thereby, since both the objects are associated with a respective threat level, the threat level of the first object may differ from the threat level of the second object e.g. set based on differing traveling speeds. Furthermore, thereby, since object characteristics of the second object are determined, characterizing features of the second detected object are established derived from input provided by the sensor(s). Moreover, thereby, since the second object is classified into a second matching object type category, the second object is categorized into an object type category - out of the set of object type categories - that is considered to correspond to the type of the detected second object. Furthermore, thereby, since both matching object type categories are associated with a respective priority level, the priority level of the first object may differ from the priority level of the second object e.g. set based on differing degree of vulnerability. Moreover, thereby, since there is derived a second matching warning sound candidate associated with the second matching object type category, there is selected - out of the set of differentiated warning sound candidates - a warning sound related to the object type category considered to match the type of the detected second object. Furthermore, thereby, since the warning sound differentiating system further - when the threat level associated with the second object is lower than the threat level of the object and/or when the second matching object type category has a lower priority level than the matching object type category - refrains from enabling playing back the second matching warning sound candidate and/or enables playing back the second matching warning sound candidate at a lowered volume level and/or with a delay, the warning sound associated with the second detected object is given lower priority than the warning sound associated with said - initially described - detected object. "Threat level" may refer to "severity level", and may be set as commonly known in the art to indicate to what degree a detected object is considered a threat to the vehicle. Moreover, "priority level" may refer to "vulnerability level" and may indicate to what degree an object is considered to be vulnerable. An object in the form of a human being may for instance be associated with a higher priority level than a priority level of a stationary object. The expression "refraining" from enabling may refer to "abstaining" from enabling. Moreover, "at a lowered volume" may refer to "at a lower volume level than a volume level of said matching warning sound candidate". The expression "with a delay" may refer to "with a time delay".

According to a second aspect of embodiment herein, the object is achieved by a warning sound differentiating system adapted for providing within a vehicle warning sounds representative of objects with which there is an impending risk of collision. The warning sound differentiating system comprises a vicinity determining unit adapted for determining - with support from one or more sensors - that there is an object in a vicinity of the vehicle, with which there is an impending risk of collision. The warning sound differentiating system further comprises a characteristics determining unit adapted for determining object characteristics of the object based on detection data of the object captured by the one or more sensors. Moreover, the warning sound differentiating system comprises an object type classifying unit adapted for classifying - based on the object characteristics - the object into a matching object type category selected from a set of object type categories. The warning sound differentiating system further comprises a warning sound deriving unit adapted for deriving from a set of differentiated warning sound candidates, a matching warning sound candidate associated with the matching object type category. Furthermore, the warning sound differentiating system comprises a playback enabling unit adapted for enabling - with support from one or more loudspeakers - playing back the matching warning sound candidate within the vehicle.

Optionally, the one or more sensors may comprise at least two different types of sensors selected from a group of cameras, ultrasonic sensors and radars. The characteristics determining unit may then further be adapted for determining the object characteristics based on fusing respective detection data captured by the at least two different types of sensors.

Optionally, the set of object type categories may comprise a category representing one or more types of vehicles. Additionally or alternatively, the set of object type categories may comprise a category representing one or more types of human beings. Additionally or alternatively, the set of object type categories may comprise a category representing one or more types of two-wheeled vehicles. Additionally or alternatively, the set of object type categories may comprise a category representing one or more types of strollers. Additionally or alternatively, the set of object type categories may comprise a category representing one or more types of animals. Additionally or alternatively, the set of object type categories may comprise a category representing one or more types of stationary objects. Additionally or alternatively, the set of object type categories may comprise a category representing one or more types of other and/or unidentifiable objects.

Moreover, optionally, additionally or alternatively, the set of differentiated warning sound candidates may comprise a candidate resembling a sound mimicking a vehicle and/or a vehicle in motion. Additionally or alternatively, the set of differentiated warning sound candidates may comprise a candidate resembling a sound mimicking a human being and/or a human being in motion. Additionally or alternatively, the set of differentiated warning sound candidates may comprise a candidate resembling a sound mimicking a two-wheeled vehicle and/or a two-wheeled vehicle in motion. Additionally or alternatively, the set of differentiated warning sound candidates may comprise a candidate resembling a sound mimicking a baby. Additionally or alternatively, the set of differentiated warning sound candidates may comprise a candidate resembling a sound mimicking an animal. Additionally or alternatively, the set of differentiated warning sound candidates may comprise a candidate indicating a stationary object. Additionally or alternatively, the set of differentiated warning sound candidates may comprise a candidate indicating other and/or unidentifiable objects.

Optionally, the vicinity determining unit may further be adapted for determining that the object is moving and determining a movement direction of the object in view of the vehicle. The warning sound deriving unit is then further adapted for deriving a matching warning sound candidate which is additionally associated with the movement direction of the object, and which matching warning sound candidate audibly reflects the movement direction.

Optionally, the warning sound differentiating system may further comprise an icon displaying unit adapted for enabling displaying within the vehicle with support from one or more displays, a matching visual icon associated with the matching warning sound candidate.

Optionally, the vicinity determining unit may be adapted for performing the determining, during parking manoeuvring of the vehicle. Additionally or alternatively, the characteristics determining unit may be adapted for performing the determining, during parking manoeuvring of the vehicle. Additionally or alternatively, the object type classifying unit may be adapted for performing the classifying, during parking manoeuvring of the vehicle. Additionally or alternatively, the warning sound deriving unit may be adapted for performing the deriving, during parking manoeuvring of the vehicle. Additionally or alternatively, the playback enabling unit may be adapted for performing the playback enabling, during parking manoeuvring of the vehicle.

Optionally, the vicinity determining unit may further be adapted for determining that there is a second object in the vicinity of the vehicle, with which there is an impending risk of collision, and associating the both objects with a respective threat level. The characteristics determining unit is then further adapted for determining object characteristics of the second object. Moreover, the object type classifying unit is then further adapted for classifying the second object into a second matching object type category, wherein both matching object type categories are associated with a respective priority level. Furthermore, the warning sound deriving unit is then further adapted for deriving a second matching warning sound candidate associated with the second matching object type category. Moreover, the playback enabling unit is then further adapted for - when the threat level associated with the second object is lower than the threat level of the object and/or when the second matching object type category has a lower priority level than the matching object type category - refraining from enabling playing back the second matching warning sound candidate and/or enabling playing back the second matching warning sound candidate at a lowered volume level and/or with a delay.

Similar advantages as those mentioned in the foregoing in relation to the first aspect correspondingly apply to the second aspect, which is why these advantages are not further discussed.

According to a third aspect of embodiments herein, the object is achieved by a vehicle at least partly comprising the warning sound differentiating system discussed above. "At least partly comprising a warning sound differentiating system" may refer to "comprising at least said vicinity determining unit, said characteristics determining unit, said object type classifying unit, said warning sound deriving unit and/or said playback enabling unit". Again, similar advantages as those mentioned in the foregoing in relation to the first aspect correspondingly apply to the third aspect, which is why these advantages are not further discussed.

According to a fourth aspect of embodiments herein, the object is achieved by a computer program product comprising a computer program containing computer program code means arranged to cause a computer or a processor to execute the steps of the warning sound differentiating system discussed above, stored on a computer-readable medium or a carrier wave. Yet again, similar advantages as those mentioned in the foregoing in relation to the first aspect correspondingly apply to the fourth aspect, which is why these advantages are not further discussed.

### BRIEF DESCRIPTION OF THE DRAWINGS

The various aspects of the non-limiting embodiments of the invention, including particular features and advantages, will be readily understood from the following detailed description and the accompanying drawings, in which:
**Figure 1** illustrates a schematic overview of an exemplifying warning sound differentiating system according to embodiments of the disclosure;
**Figure 2** illustrates schematic overviews of exemplifying data tables according to embodiments of the disclosure;
**Figure 3** is a schematic block diagram illustrating an exemplifying warning sound differentiating system according to embodiments of the disclosure; and
**Figure 4** is a flowchart depicting an exemplifying method for providing within a vehicle warning sounds representative of objects with which there is an impending risk of collision, according to embodiments of the disclosure.

### DETAILED DESCRIPTION

The non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to providing within a vehicle warning sounds representative of objects with which there is an impending risk of collision, there will be disclosed an approach which enables emitting in-vehicle audible warnings relevant for said objects.

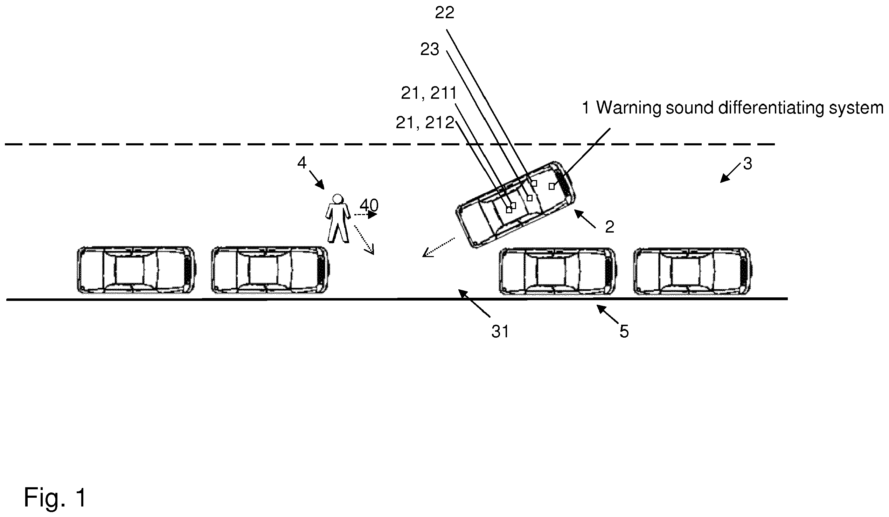

Referring now to the figures and **Figure 1** in particular, there is illustrated a schematic overview of an exemplifying **warning sound differentiating system 1** according to embodiments of the disclosure. The warning sound differentiating system 1 is adapted for providing within a **vehicle 2 -** here represented by an exemplifying passenger car - warning sounds representative of objects with which there is an impending risk of collision. The vehicle 2 in the shown embodiment comprises - and/or has on-board - one or more **sensors 21.** The one or more sensors 21 may be arbitrarily positioned, for instance inside the vehicle 2 such as near the windscreen or rear window thereof, integrated along either side of said vehicle 2, on the roof of said vehicle 2, in the front of said vehicle 2 such as near the grill or headlights thereof, and/or in the rear of said vehicle 2 such as near the number plate or taillights thereof. Optionally, the one or more sensors 21 comprise at least two different types of sensors selected from a group of cameras, ultrasonic sensors and radars. In the shown embodiment, the one or more sensors 21 comprises a first type of sensor here represented by one or more **cameras 211,** and a second type of sensor, here represented by one or more **ultrasonic sensors 212.** The vehicle 2 further comprises - and/or has on-board - one or more **loudspeakers 22,** which may be arbitrarily distributed throughout the vehicle 2. According to an example, said loudspeakers 22 may be disposed such that 3D spatial sound is enabled. The vehicle 2 further comprises - and/or has on-board - one or more optional **displays 23.** The one or more displays 23 may be arbitrarily positioned, for instance integrated in e.g. a dashboard of the vehicle 2 and/or provided by means of a handheld device on-board the vehicle 2 such as by means a mobile phone, smartphone, iPad or the like. The vehicle 2 is in the shown embodiment engaged in parking manoeuvring, here into an exemplifying **parallel parking spot 31** along a **street 3.**

In a vicinity of the vehicle 2, there is a **first object 4 -** which may be referred to as a first object - with which there is an impending risk of collision. The object 4 is here represented by an exemplifying human being, more specifically a child, in the shown embodiment moving - here walking - across the street 3 and subsequently moving toward the parallel parking spot 31. Accordingly, the object 4, i.e. the child, is to some extent here moving toward the vehicle 2, in a **movement direction 40** in view of the vehicle 2.

Further shown is a second **object 5** with which there is an impending risk of collision. The second object 5 is here represented by an exemplifying other vehicle, in the shown embodiment parked in an exemplifying manner adjacent a front end of the parallel parking spot 31.

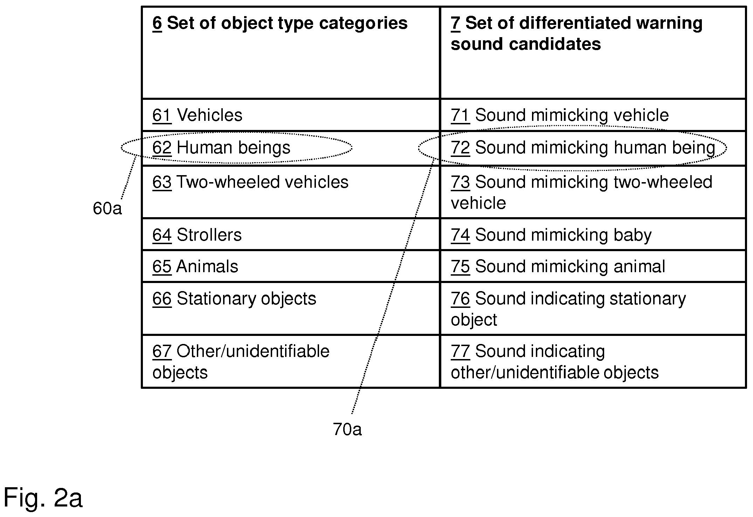

**Figure 2a** illustrates a schematic overview of an exemplifying data table according to embodiments of the disclosure. The optional data table comprises a **set of object type categories 6.** In the shown embodiment, the set of object type categories 6 comprises a **category 61** representing one or more types of vehicles, a **category 62** representing one or more types of human beings, a **category 63** representing one or more types of two-wheeled vehicles, a **category 64** representing one or more types of strollers, a **category 65** representing one or more types of animals, a **category 66** representing one or more types of stationary objects, and a **category 67** representing one or more types of other and/or unidentifiable objects.

The optional data table of Figure 2a further comprises a **set of warning sound candidates 7.** In the shown embodiment, the set of warning sound candidates 7 comprises a **candidate 71** resembling a sound mimicking a vehicle and/or a vehicle in motion, which is associated with the category 61 representing one or more types of vehicles. Moreover, in the shown embodiment, the set of warning sound candidates 7 further comprises a **candidate 72** resembling a sound mimicking a human being and/or a human being in motion, which is associated with the category 62 representing one or more types of human beings. Furthermore, in the shown embodiment, the set of warning sound candidates 7 further comprises a **candidate73** resembling a sound mimicking a two-wheeled vehicle and/or a two-wheeled vehicle in motion, which is associated with the category 63 representing one or more types of two-wheeled vehicles. Moreover, in the shown embodiment, the set of warning sound candidates 7 further comprises a **candidate 74** resembling a sound mimicking a baby, which is associated with the category 64 representing one or more types of strollers. Furthermore, in the shown embodiment, the set of warning sound candidates 7 further comprises a **candidate 75** resembling a sound mimicking an animal, which is associated with the category 65 representing one or more types of animals. Moreover, in the shown embodiment, the set of warning sound candidates 7 further comprises a **candidate 66** indicating a stationary object, which is associated with the category 66 representing one or more types of stationary objects. Furthermore, in the shown embodiment, the set of warning sound candidates 7 further comprises a **candidate 77** indicating other and/or unidentifiable objects, which is associated with the category 67 representing one or more types of other and/or unidentifiable objects.

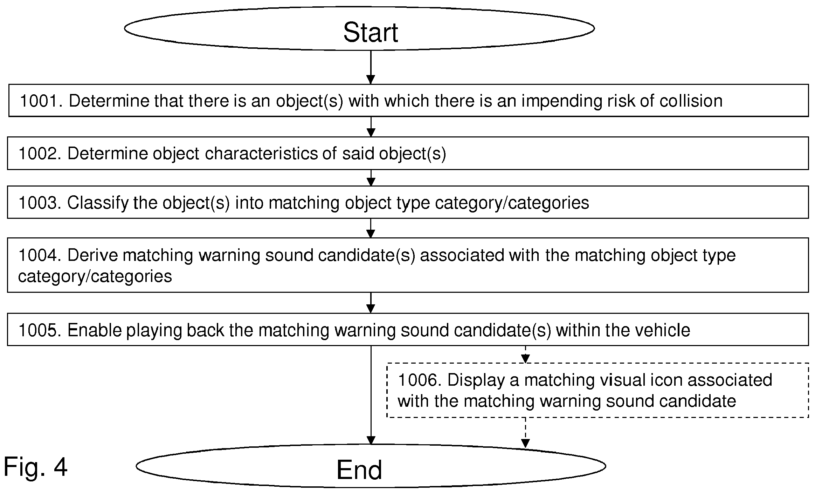

Further shown is a **matching object type category 60 -** in Figure 2a referred to as **60a -** and a **matching warning sound candidate 70 -** in Figure 2a referred to as **70a -** both of which will be further explained in conjunction with Figure 4.

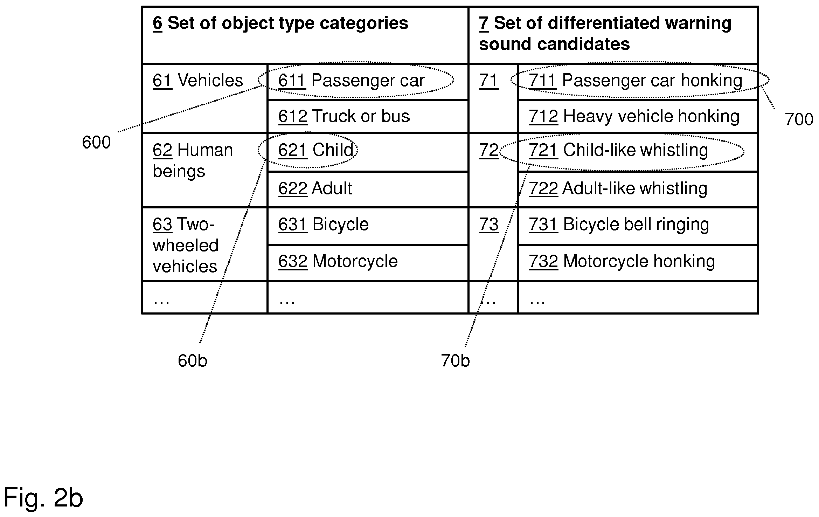

**Figure 2b** illustrates a schematic overview of an alternative exemplifying data table according to embodiments of the disclosure. The optional data table of Figure 2b resembles the data table of Figure 2a. Here, the category 61 representing one or more types of vehicles comprises an exemplifying **passenger car type 611** and an exemplifying **truck or bus type 612.** Moreover, the category 62 representing one or more types of human beings here comprises an exemplifying **child type 621** and an exemplifying **adult type 622.** Furthermore, the category 63 representing one or more types of two-wheeled vehicles here comprises an exemplifying **bicycle type 631** and an exemplifying **motorcycle type 632.** Moreover, the category 65 representing one or more types of animals here comprises - although not shown - an exemplifying small animal type representing e.g. a dog or a cat, and an exemplifying large animal type representing e.g. an elk or a horse. Furthermore, the category 66 representing one or more types of stationary objects here comprises - although not shown - an exemplifying hard stationary object type representing e.g. a wall, a curb and/or a pillar, and an exemplifying soft stationary object type representing e.g. hedges, grass and/or leaves.

Further, in the shown embodiment of Figure 2b, the candidate 71 resembling a sound mimicking a vehicle and/or a vehicle in motion, is split into a **first candidate 711** resembling a sound mimicking a passenger car and/or a passenger car in motion e.g. represented by passenger car honking, and a **second candidate 712** resembling a sound mimicking a heavy vehicle and/or a heavy vehicle in motion e.g. represented by heavy vehicle honking. The first candidate 711 resembling a sound mimicking a passenger car and/or a passenger car in motion is associated with the category 611 representing a passenger car type. Similarly, the second candidate 712 resembling a sound mimicking a heavy vehicle and/or a heavy vehicle in motion is associated with the category representing a truck or bus type 612. Moreover, the candidate 72 resembling a sound mimicking a human being and/or a human being in motion, is split into a **first candidate 721** resembling a sound mimicking a child and/or a child in motion e.g. represented by child-like whistling, and a **second candidate 722** resembling a sound mimicking an adult and/or an adult in motion e.g. represented by adult-like whistling. The first candidate 721 resembling a sound mimicking a child and/or a child in motion is associated with the category 621 representing a child type. Similarly, the second candidate 722 resembling a sound mimicking an adult and/or an adult in motion is associated with the category 622 representing an adult type. Furthermore, the candidate 73 resembling a sound mimicking a two-wheeled vehicle and/or a two-wheeled vehicle in motion, is split into a **first candidate 731** resembling a sound mimicking a bicycle and/or a bicycle in motion e.g. represented by bicycle bell ringing, and a **second candidate 732** resembling a sound mimicking a motorcycle and/or a motorcycle in motion e.g. represented by motorcycle honking. The first candidate 731 resembling a sound mimicking a bicycle and/or a bicycle in motion is associated with the category 631 representing a bicycle type. Similarly, the second candidate 732 resembling a sound mimicking a motorcycle and/or a motorcycle in motion is associated with the category 632 representing a motorcycle type.

Further shown is the matching object type category 60 - in Figure 2b referred to as **60b** - and the matching warning sound candidate 70 - in Figure 2b referred to as **70b -** both of which will be further explained in conjunction with Figure 4. Moreover is a **second matching object type category 600 and a second matching warning sound candidate 700** shown, which similarly will be further explained in conjunction with Figure 4.

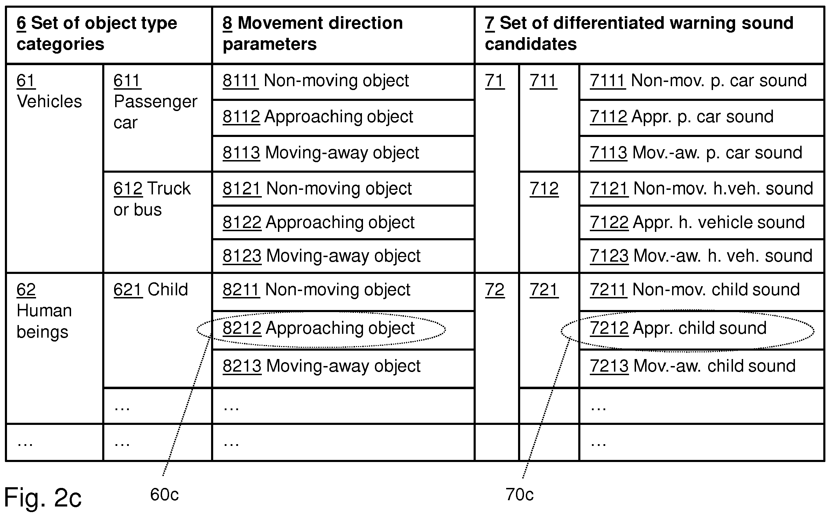

**Figure 2c** illustrates a schematic overview of yet another alternative exemplifying data table according to embodiments of the disclosure. The optional data table of Figure 2c resembles the data table of Figure 2a and the data table of Figure 2b. The exemplifying data table of Figure 2c comprises **movement direction parameters 8.** Here, there are exemplifying three different types of movement direction parameters 8; **parameters 8111, 8121, 8211** representing non-moving object, **parameter 8112, 8122, 8212** representing approaching object, and **parameter 8113, 8123, 8213** representing moving-away object.

Further, in the shown embodiment of Figure 2c, the first candidate 711 resembling a sound mimicking a passenger car and/or a passenger car in motion, is split into a **candidate 7111** resembling a sound mimicking a non-moving passenger car, which is associated with the parameter 8111 representing non-moving object, a **candidate 7112** resembling a sound mimicking a passenger car approaching, which is associated with the parameter 8112 representing approaching object, and a **candidate 7113** resembling a sound mimicking a passenger car moving away, which is associated with the parameter 8113 representing moving-away object. In a similar manner, the second candidate 712 resembling a sound mimicking a heavy vehicle and/or a heavy vehicle in motion, is split into a **candidate 7121** resembling a sound mimicking a non-moving heavy vehicle, which is associated with the parameter 8121 representing non-moving object, a **candidate 7122** resembling a sound mimicking a heavy vehicle approaching, which is associated with the parameter 8122 representing approaching object, and a **candidate 7123** resembling a sound mimicking a heavy vehicle moving away, which is associated with the parameter 8123 representing moving-away object. In a similar manner, the first candidate 721 resembling a sound mimicking a child and/or a child in motion, is split into a **candidate 7211** resembling a sound mimicking a non-moving child, which is associated with the parameter 8211 representing non-moving object, a **candidate 7212** resembling a sound mimicking child approaching, which is associated with the parameter 8212 representing approaching object, and a **candidate 7213** resembling a sound mimicking a child moving away, which is associated with the parameter 8213 representing moving-away object.

Further shown is the matching object type category 60 - in Figure 2c referred to as **60c -** and the matching warning sound candidate 70 - in Figure 2c referred to as **70c -** both of which will be further explained in conjunction with Figure 4.

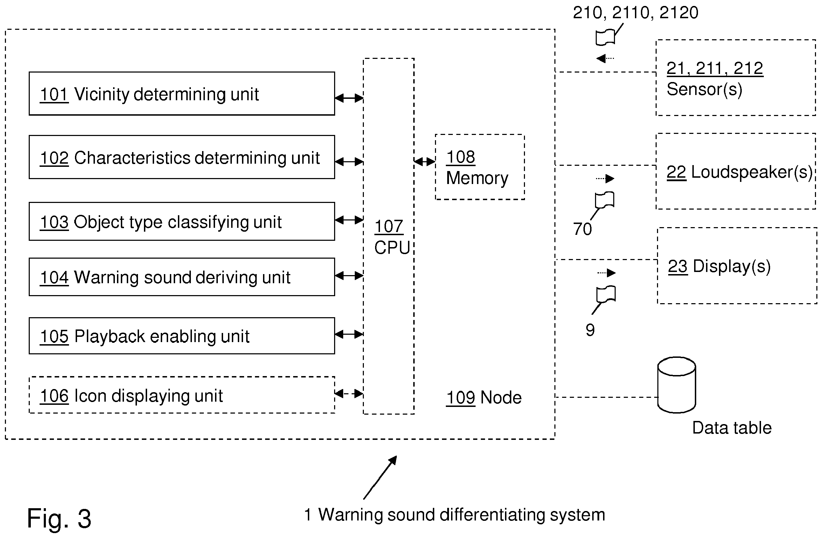

As further shown in **Figure 3****,** which depicts a schematic block diagram illustrating an exemplifying warning sound differentiating system 1 according to embodiments of the disclosure, the warning sound differentiating system 1 comprises a **vicinity determining unit 101,** a **characteristics determining unit 102,** an **object type classifying unit 103,** a **warning sound deriving unit 104,** and a **playback enabling unit 105,** all of which will be described in greater detail further on in the description. The warning sound differentiating system 1 may further comprise an optional **icon displaying unit 106,** which similarly will be described in greater detail further on. Furthermore, the embodiments herein for providing within a vehicle warning sounds representative of objects with which there is an impending risk of collision, may be implemented through one or more processors, such as a **processor 107,** here denoted CPU, together with computer program code for performing the functions and actions of the embodiments herein. Said program code may also be provided as a computer program product, for instance in the form of a data carrier carrying computer program code for performing the embodiments herein when being loaded into the warning sound differentiating system 1. One such carrier may be in the form of a CD ROM disc. It is however feasible with other data carriers such as a memory stick. The computer program code may furthermore be provided as pure program code on a server and downloaded to the warning sound differentiating system 1. The warning sound differentiating system 1 may further comprise a **memory 108** comprising one or more memory units. The memory 108 may be arranged to be used to store e.g. information, and further to store data, configurations, schedulings, and applications, to perform the methods herein when being executed in the warning sound differentiating system 1. Furthermore, the units 101-106 discussed above, the processor 107 and the memory 108 may for instance fully or at least partly be implemented in one or several arbitrary **nodes 109,** and/or in one or more mobile units which may be carried on-board, be mounted to and/or be integrated with the vehicle 2. A node 109 may be an electronic control unit (ECU) or any suitable generic electronic device throughout the vehicle 2. According to an alternative example, the warning sound differentiating system 1 may be represented by a plug-in solution, such that said warning sound differentiating system 1 at least partly is implemented on for instance a dongle. In that manner, an aftermarket solution may be provided to any arbitrary vehicle 2 and/or mobile device suitable. Those skilled in the art will also appreciate that the units 101-106 discussed above, which will be described in further detail later on in this description, may refer to a combination of analog and digital circuits, and/or one or more processors configured with software and/or firmware, e.g. stored in a memory such as the memory 108, that when executed by the one or more processors such as the processor 107 perform as will be described in more detail later on. One or more of these processors, as well as the other digital hardware, may be included in a single ASIC (Application-Specific Integrated Circuitry), or several processors and various digital hardware may be distributed among several separate components, whether individually packaged or assembled into a SoC (System-on-a-Chip).

Further shown in Figure 3 is a **matching visual icon 9** as well as **detection data 210 -** where detection data from the one or more cameras 211 is referred to as **2110** and detection data from the one or more ultrasonic sensors 212 is referred to as **2120 -** all of which will be further explained in conjunction with Figure 4.

**Figure 4** is a flowchart depicting an exemplifying method for providing within a vehicle warning sounds representative of objects with which there is an impending risk of collision according to embodiments of the disclosure. The method is performed by the warning sound differentiating system 1, for providing within a vehicle warning sounds representative of objects with which there is an impending risk of collision. The exemplifying method, which may be continuously repeated, comprises the following actions discussed with support from Figures 1-3. The actions may be taken in any suitable order; for instance may Action 1005 and optional Action 1006 be performed simultaneously and/or in an alternate order.

Optionally, either or all of the following Actions 1001-1006 may be performed during parking manoeuvring of the vehicle 2.

### Action 1001

In Action 1001, as shown with support from Figures 1 and 3, the warning sound differentiating system 1 determines - e.g. by means of the vicinity determining unit 101 - with support from the one or more sensors 21, 211, 212, that there is an object 4 in a vicinity of the vehicle 2, with which there is an impending risk of collision.

Optionally, Action 1001 may comprise determining that the object 4 is moving and determining a movement direction 40 of the object 4 in view of the vehicle 2, as shown with support from Figure 1.

Furthermore, optionally, Action 1001 may further comprise determining that there is a second object 5 in the vicinity of the vehicle 2, with which there is an impending risk of collision, as shown with support from Figure 1. Both objects 4, 5 are associated with a respective threat level.

### Action 1002

In Action 1002, as shown with support from Figures 1 and 3, the warning sound differentiating system 1 determines - e.g. by means of the characteristics determining unit 102 - object characteristics of the object 4 based on detection data 210 of the object 4 captured by the one or more sensors 21.

Optionally, should the one or more sensors 21 comprise at least two different types 211, 212 of sensors selected from a group of cameras, ultrasonic sensors and radars, then Action 1002 may comprises determining the object characteristics based on fusing respective detection data 2110,2120 captured by the at least two different types 211, 212 of sensors, as shown with support from Figures 1 and 3.

Furthermore, optionally, should Action 1001 comprise determining that there is a second object 5 in the vicinity of the vehicle 2 with which there is an impending risk of collision, then Action 1002 may further comprise determining object characteristics of the second object 5, as shown with support from Figure 1.

### Action 1003

In Action 1003, as shown with support from Figures 1, 2a, 2b and 3, the warning sound differentiating system 1 classifies - e.g. by means of the object type classifying unit 103 - based on the object characteristics, the object 4 into a matching object type category 60a, 60b selected from a set of object type categories 6.

Optionally, should Action 1002 comprise determining object characteristics of the second object 5, then Action 1001 may further comprise classifying the second object 5 into a second matching object type category 600, as shown with support from Figure 2b. Both matching object type categories 60b, 600 are associated with a respective priority level.

### Action 1004

In Action 1004, as shown with support from Figures 1, 2a, 2b and 3, the warning sound differentiating system 1 derives - e.g. by means of the warning sound deriving unit 104 - from a set of differentiated warning sound candidates 7, a matching warning sound candidate 70a, 70b associated with the matching object type category 60a, 60b.

Optionally, should Action 1001 comprise determining that the object 4 is moving and determining a movement direction 40 of the object 4 in view of the vehicle 2, then Action 1004 may - as shown with support from Figure 2c - comprise deriving a matching warning sound candidate 70c which is additionally associated with the movement direction 40, 8212 of the object 4, which matching warning sound candidate 70c is audibly reflecting the movement direction 40.

Furthermore, optionally, should Action 1003 comprise classifying the second object 5 into a second matching object type category 600, then Action 1004 may comprise deriving a second matching warning sound candidate 700 associated with the second matching object type category 600, as shown with support from Figure 2b.

### Action 1005

In Action 1005, as shown with support from Figures 1, 2a, 2b and 3, the warning sound differentiating system 1 enables - e.g. by means of the playback enabling unit 105 - with support from one or more loudspeakers 22 - playing back the matching warning sound candidate 70a, 70b within the vehicle 2.

Optionally, should Action 1004 comprise deriving a second matching warning sound candidate 700 associated with the second matching object type category 600, then Action 1005 may as shown in Figure 2b further comprise - when the threat level associated with the second object 5 is lower than the threat level of the object 4 and/or when the second matching object type category 600 has a lower priority level than the matching object type category 60b - refraining from enabling playing back the second matching warning sound candidate 700 and/or enabling playing back the second matching warning sound candidate 700 at a lowered volume level and/or with a delay.

### Action 1006

In optional Action 1006, as shown with support from Figures 1-3, the warning sound differentiating system 1 enables - e.g. by means of the optional icon display unit 105 - displaying within the vehicle 2 with support from the one or more displays 23, a matching visual icon 9 associated with the matching warning sound candidate 70a, 70b, 70c.

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by a warning sound differentiating system (1) for providing within a vehicle (2) warning sounds representative of objects with which there is an impending risk of collision, said method comprising:
***determining*** (1001) - with support from one or more sensors (21) - that there is an object (4) in a vicinity of said vehicle (2), with which there is an impending risk of collision;
***determining*** (1002) object characteristics of said object (4) based on detection data (210) of said object (4) captured by said one or more sensors (21);
***classifying*** (1003) based on said object characteristics, said object (4) into a matching object type category (60) selected from a set of object type categories (6);
***deriving*** (1004) from a set of differentiated warning sound candidates (7), a matching warning sound candidate (70) associated with said matching object type category (60); and
***enabling*** (1005) - with support from one or more loudspeakers (22) - playing back said matching warning sound candidate (70) within said vehicle (2).

2. The method according to claim 1, wherein said one or more sensors (21) comprise at least two different types (211, 212) of sensors selected from a group of cameras, ultrasonic sensors and radars, said ***determining*** (1002) object characteristics then comprising determining said object characteristics based on fusing respective detection data (2110,2120) captured by said at least two different types (211,212) of sensors.

3. The method according to claim 1 or 2,
wherein said set of object type categories (6) comprises one or more of:
a category (61) representing one or more types of vehicles;
a category (62) representing one or more types of human beings;
a category (63) representing one or more types of two-wheeled vehicles;
a category (64) representing one or more types of strollers;
a category (65) representing one or more types of animals;
a category (66) representing one or more types of stationary objects; and/or
a category (67) representing one or more types of other and/or unidentifiable objects,
and/or
wherein said set of differentiated warning sound candidates (7) comprises one or more of:
a candidate (71) resembling a sound mimicking a vehicle and/or a vehicle in motion;
a candidate (72) resembling a sound mimicking a human being and/or a human being in motion;
a candidate (73) resembling a sound mimicking a two-wheeled vehicle and/or a two-wheeled vehicle in motion;
a candidate (74) resembling a sound mimicking a baby;
a candidate (75) resembling a sound mimicking an animal;
a candidate (76) indicating a stationary object; and/or
a candidate (77) indicating other and/or unidentifiable objects.

4. The method according to any one of claims 1-3, wherein said ***determining*** (1001) that there is an object (4) in a vicinity of said vehicle (2), further comprises determining that said object (4) is moving and determining a movement direction (40) of said object (4) in view of said vehicle (2);
said ***deriving*** (1004) then comprising deriving a matching warning sound candidate (70c) which is additionally associated with said movement direction (40, 8212) of the object (4), said matching warning sound candidate (70c) audibly reflecting said movement direction (40, 8212).

5. The method according to any one claims 1-4, further comprising:
***enabling*** (1006) displaying within said vehicle (2) with support from one or more displays (23), a matching visual icon (9) associated with said matching warning sound candidate (70).

6. The method according to any one claims 1-5, wherein said ***determining*** (1001) that there is an object (4) in a vicinity of said vehicle (2), said ***determining*** (1002) object characteristics, said ***classifying*** (1003), said ***deriving*** (1004) and/or said ***enabling*** (1005), is performed during parking manoeuvring of said vehicle (2).

7. The method according to any one of claims 1-6,
wherein said ***determining*** (1001) that there is an object (4) in a vicinity of said vehicle (2), further comprises determining that there is a second object (5) in the vicinity of said vehicle (2) with which there is an impending risk of collision, and associating said both objects (4, 5) with a respective threat level;
wherein said ***determining*** (1002) object characteristics further comprises determining object characteristics of said second object (5);
wherein said ***classifying*** (1003) further comprises classifying said second object (5) into a second matching object type category (600), said both matching object type categories (60b, 600) being associated with a respective priority level;
wherein said ***deriving*** (1004) comprises deriving a second matching warning sound candidate(700) associated with said second matching object type category (600); and
wherein said ***enabling*** (1005) playing back further comprises - when the threat level associated with the second object (5) is lower than the threat level of said object (4) and/or when the second matching object type category (600) has a lower priority level than said matching object type category (60b) - refraining from enabling playing back said second matching warning sound candidate (700) and/or enabling playing back said second matching warning sound candidate (700) at a lowered volume level and/or with a delay.

8. A warning sound differentiating system (1) adapted for providing within a vehicle (2) warning sounds representative of objects with which there is an impending risk of collision, said warning sound differentiating system (1) comprising:
a **vicinity determining unit** (101) adapted for ***determining*** (1001) - with support from one or more sensors (21) - that there is an object (4) in a vicinity of said vehicle (2), with which there is an impending risk of collision;
a **characteristics determining unit** (102) adapted for ***determining*** (1002) object characteristics of said object (4) based on detection data (210) of said object (4) captured by said one or more sensors (21);
an **object type classifying unit** (103) adapted for ***classifying*** (1003) based on said object characteristics, said object (4) into a matching object type category (60) selected from a set of object type categories (6);
a **warning sound deriving unit** (104) adapted for ***deriving*** (1004) from a set of differentiated warning sound candidates (7), a matching warning sound candidate (70) associated with said matching object type category (60); and
a **playback enabling unit** (105) adapted for ***enabling*** (1005) - with support from one or more loudspeakers (22) - playing back said matching warning sound candidate (70) within said vehicle (2).

9. The warning sound differentiating system (1) according to claim 8, wherein said one or more sensors (21) comprise at least two different types (211, 212) of sensors selected from a group of cameras, ultrasonic sensors and radars, said characteristics determining unit (102) then further being adapted for determining said object characteristics based on fusing respective detection data (2110,2120) captured by said at least two different types (211,212) of sensors.

10. The warning sound differentiating system (1) according to claim 8 or 9,
wherein said set of object type categories (6) comprises one or more of:
a category (61) representing one or more types of vehicles;
a category (62) representing one or more types of human beings;
a category (63) representing one or more types of two-wheeled vehicles;
a category (64) representing one or more types of strollers;
a category (65) representing one or more types of animals;
a category (66) representing one or more types of stationary objects; and/or
a category (67) representing one or more types of other and/or unidentifiable objects,
and/or
wherein said set of differentiated warning sound candidates (7) comprises one or more of:
a candidate (71) resembling a sound mimicking a vehicle and/or a vehicle in motion;
a candidate (72) resembling a sound mimicking a human being and/or a human being in motion;
a candidate (73) resembling a sound mimicking a two-wheeled vehicle and/or a two-wheeled vehicle in motion;
a candidate (74) resembling a sound mimicking a baby;
a candidate (75) resembling a sound mimicking an animal;
a candidate (76) indicating a stationary object; and/or
a candidate (77) indicating other and/or unidentifiable objects.

11. The warning sound differentiating system (1) according to any one of claims 8-10, wherein said vicinity determining unit (101) further is adapted for determining that said object (4) is moving and determining a movement direction (40) of said object (4) in view of said vehicle (2);
said warning sound deriving unit (104) then further being adapted for deriving a matching warning sound candidate (70c) which is additionally associated with said movement direction (40, 8212) of the object (4), said matching warning sound candidate (70c) audibly reflecting said movement direction (40, 8212).

12. The warning sound differentiating system (1) according to any one claims 8-11, further comprising:
an **icon displaying unit** (106) adapted for ***enabling*** (1006) displaying within said vehicle (2) with support from one or more displays (23), a matching visual icon (9) associated with said matching warning sound candidate (70).

13. The warning sound differentiating system (1) according to any one claims 8-12, wherein:
said vicinity determining unit (101) is adapted for performing said *determining* (1001),
said characteristics determining unit (102) is adapted for performing said *determining* (1002),
said object type classifying unit (103) is adapted for performing said *classifying* (1003),
said warning sound deriving unit (104) is adapted for performing said *deriving* (1004), and/or
said playback enabling unit (105) is adapted for performing said *enabling* (1005) playing back,
during parking manoeuvring of said vehicle.

14. The warning sound differentiating system (1) according to any one of claims 8-13,
wherein said vicinity determining unit (101) further is adapted for determining that there is a second object (5) in the vicinity of said vehicle (2) with which there is an impending risk of collision, and associating said both objects (4, 5) with a respective threat level;
wherein said characteristics determining unit (102) further is adapted for determining object characteristics of said second object (5);
wherein said object type classifying unit (103) further is adapted for classifying said second object (5) into a second matching object type category (600), said both matching object type categories (60b, 600) being associated with a respective priority level;
wherein said warning sound deriving unit (104) further is adapted for deriving a second matching warning sound candidate (700) associated with said second matching object type category (600); and
wherein said playback enabling unit (105) further is adapted for - when the threat level associated with the second object (5) is lower than the threat level of said object (4) and/or when the second matching object type category (600) has a lower priority level than said matching object type category (60b) - refraining from enabling playing back said second matching warning sound candidate (700) and/or enabling playing back said second matching warning sound candidate (700) at a lowered volume level and/or with a delay.

15. A vehicle (2) at least partly comprising a warning sound differentiating system (1) according to any one of claims 8-14.
